# FASCICULE DE BREVET EUROPEEN

(11) **EP 2 976 301 B1**
(45) Date de publication et mention de la délivrance du brevet: **06.01.2021**
(21) Numéro de dépôt: 14716887.6
(22) Date de dépôt: 18.03.2014
(51) Int. Cl.: C02F 3/04, C02F 3/06, B01D 39/04, C02F 3/10, C02F 3/12

(54) **FILTRE COMPRENANT D'ÉCORCE DE PIN POUR L'ÉPURATION DES EAUX USÉES DOMESTIQUES**
FILTER MIT PINIENBORKE ZUR REINIGUNG VON HAUSHALTSABWASSER
FILTER COMPRISING PINE BARK FOR PURIFYING DOMESTIC WASTE WATER

(30) Priorité: 18.03.2013 FR 1352395
(43) Date de publication de la demande: 27.01.2016
(73) Titulaire: EPARCO, 89710 Senan (FR)
(72) Inventeur: PHILIP, Hervé, F-34660 Cournonsec (FR); MAUNOIR, Siegfried, F-34560 Montbazin (FR)
(74) Mandataire: Cassiopi
(86) Numéro de dépôt international: PCT/FR2014/050629
(87) Numéro de publication internationale: WO 2014/147338

(56) Documents cités:
- WO-A1-92/15397
- WO-A2-02/46105
- US-A- 4 086 167
- US-B1- 6 428 691
- LENS P N ET AL: "DIRECT TREATMENT OF DOMESTIC WASTEWATER BY PERCOLATION OVER PEAT, BARK AND WOODCHIPS", WATER RESEARCH, ELSEVIER, AMSTERDAM, NL, vol. 28, no. 1, 1 janvier 1994 (1994-01-01), pages 17-26, XP000398784, ISSN: 0043-1354, DOI: 10.1016/0043-1354(94)90115-5 cité dans la demande
- SAHAR S DALAHMEH ET AL: "Efficiency of Bark, Activated Charcoal, Foam and Sand Filters in Reducing Pollutants from Greywater", WATER, AIR, AND SOIL POLLUTION, KLUWER ACADEMIC PUBLISHERS, DO, vol. 223, no. 7, 29 mars 2012 (2012-03-29) , pages 3657-3671, XP035092836, ISSN: 1573-2932, DOI: 10.1007/S11270-012-1139-Z cité dans la demande

## Description

L'invention se rapporte au domaine de l'épuration des eaux usées domestiques, tout spécialement en assainissement non collectif, du type comprenant une fosse septique et un filtre d'épuration en aval.

La norme française NF DTU 64-1 (Août 2013), a pour objet de préciser les règles de mise en oeuvre relatives à certains ouvrages d'assainissement non collectif de traitement des eaux usées domestiques des maisons d'habitation. Elle précise que les filières de traitement des eaux usées domestiques desservant les maisons d'habitation sont constituées d'un dispositif de prétraitement (ou traitement primaire), suivi d'un système de traitement par le sol en place ou reconstitué avec infiltration ou évacuation des eaux usées domestiques traitées. Le prétraitement correspond à la partie de la filière comprenant généralement une fosse septique disposée en amont. L'épuration lorsqu'elle est réalisée par un sol reconstitué séparément de l'évacuation correspond à un filtre disposé en aval du traitement primaire. Selon cette norme, les matériaux filtrants utilisés pour l'épuration sont, moyennant diverses réalisations, du sable et des graviers lavés.

Un tel filtre comporte typiquement une entrée pour les eaux à traiter, une sortie pour les eaux traitées, des moyens de filtration interposés entre l'entrée et la sortie comportant deux réseaux de tuyaux respectivement de répartition et de drainage associés respectivement à l'entrée et à la sortie, placés sensiblement en regard et espacés l'un de l'autre, et pourvus de perforations dans leurs parois, réparties longitudinalement, et des moyens filtrants interposés entre les deux réseaux, comprenant les matériaux filtrants.

Avec les réalisations de la norme NF DTU 64-1 (Août 2013), la surface en plan des moyens filtrants doit être importante et, en conséquence, le filtre nécessite une emprise au sol conséquente, ce qui est un inconvénient s'agissant d'une filière de traitement des eaux usées domestiques d'une maison d'habitation.

Pour résoudre ce problème, le document EP 0672440 propose et décrit un filtre tel que, tout d'abord, le réseau de tuyaux de répartition est adjacent à une première surface des moyens filtrants, les moyens de filtration comportent des moyens de répartition associés au réseau de tuyaux de répartition et destinés à assurer une diffusion des eaux à traiter vers les moyens filtrants, les moyens de répartition se présentent sous la forme d'une nappe ou de bandes d'absorption et de diffusion des eaux entre le réseau de tuyaux de répartition et les moyens filtrants, lesquels comprennent au moins une couche granulaire filtrante. D'autre part, le matériau de filtration comprend des granulats de zéolithe, présentant une granulométrie comprise entre 0,1 mm et 10 mm environ. Selon une réalisation, il est prévu que la couche granulaire comprend deux sous-couches, une supérieure de 2 mm à 5 mm et une inférieure de 0,5 mm à 2 mm.

Un tel filtre a été commercialisé par la société EPARCO sous la dénomination « filtre à massif de zéolithe Eparco ». Conçu pour une habitation de 5 pièces principales, il a une surface de 5 m² seulement, contre 25 m² pour un filtre à sable équivalent. Des versions homothétiques de ce filtre existent pour des habitations de plus grande taille ou pour un regroupement d'habitations. Un tel filtre donne toute satisfaction. Cependant le poids de la zéolithe implique de privilégier un montage des filtres sur site plutôt qu'un prémontage en usine.

Le document EP 1539325 B1 décrit un matériau filtrant constitué de mésocarpes de noix de coco, consistant en un mélange de parenchymes et de fibres, plus particulièrement les fibres liées. Cependant, un tel matériau filtrant nécessite un entretien annuel pour éviter son colmatage.

Il existe donc le besoin de disposer d'un matériau susceptible de faire fonction de matériau filtrant suffisamment léger pour permettre un prémontage en usine et ne nécessitant pas d'entretien récurrent.

Le principe des filtres à zéolithe ou à fibres de coco est le suivant: l'eau prétraitée par la fosse septique, c'est à dire débarrassée de ses matières solides, est épandue de la façon la plus uniforme possible en surface d'un massif filtrant constitué de grains ou de fibres en vrac. Au sein de ces matériaux l'air circule dans les espaces libres et apporte de l'oxygène à l'eau qui emprunte préférentiellement les plus petits espaces du fait du phénomène de succion capillaire. L'écoulement est donc de type non saturé. En présence d'oxygène et des substances nutritives qui constituent la pollution à dégrader, des bactéries et des protozoaires se développent à la surface du matériau et consomment cette pollution. La production de biomasse épuratrice (bactéries et protozoaires) est équilibrée par sa dégradation (par mortalité naturelle et par ses pertes dans l'effluent de sortie) tant que la charge appliquée au filtre ne dépasse pas un certain seuil. Ainsi le filtre (appelé biofiltre) ne produit pas de boues résiduelles et peut fonctionner plusieurs années sans se colmater.

Cependant, les propriétés physiques et chimiques du matériau mis en oeuvre jouent un rôle déterminant :
- Le matériau doit être stable à l'eau et à la dégradation biologique sur le long terme,
- Le matériau doit présenter une porosité suffisante pour permettre l'apport d'oxygène vers les éléments épurateurs,
- Le matériau doit créer une microporosité suffisante pour retenir l'eau à épurer le temps nécessaire, sans empêcher l'aération du massif filtrant,
- Le pH et les caractéristiques physicochimiques de surface du matériau doivent être compatibles avec le développement de la biomasse épuratrice.

La combinaison de ces caractéristiques doit permettre, à la charge d'application prévue un équilibre entre d'une part la production de la biomasse épuratrice et d'autre part son élimination par mortalité naturelle, de façon à ce que la quantité de biomasse reste constante.

La zéolithe de type chabazite utilisée dans le filtre EPARCO répond à l'ensemble de ces critères.

Par contre, le sable d'épuration, tel que celui préconisé dans la norme française NF DTU 64-1 (Août 2013) ne répond qu'à trois des critères décrits ci-dessus : à charge égale, il présente trop peu de porosité libre pour l'aération du massif. Aussi, alors qu'un filtre dit compact nécessite de l'ordre de 1m² de surface de filtration par personne, un filtre à sable en nécessite 5 fois plus du fait de sa faible capacité d'aération.

Ainsi, il s'avère que trouver un nouveau matériau de filtration dont les propriétés physiques et chimiques sont aptes à la réalisation d'un biofiltre compact d'épuration des effluents septiques n'est pas une chose aisée, bien au contraire, car les propriétés physico-chimiques requises pour le matériau sont multiples. Les essais doivent notamment être réalisés sur long terme, avec de véritables eaux usées domestiques.

Après de longs travaux de recherche et d'expérimentation, les inventeurs ont trouvé un matériau de filtration qui possède les propriétés physico-chimiques indiquées ci-dessus requises pour pouvoir l'utiliser comme biofiltre et qui en outre permet de réaliser un filtre compact, de l'ordre de celui du filtre à zéolithe.

Le matériau filtrant objet de l'invention est préparé à partir de morceaux d'écorce de pin, de nature renouvelable et disponible localement. Il présente l'avantage d'avoir les mêmes performances épuratoires que la zéolithe tout en étant plus léger.

Le choix particulier de morceaux d'écorces de pin comme matériau filtrant permet d'obtenir des performances épuratoires en accord avec la réglementation en assainissement non collectif. En effet, le filtre selon l'invention est capable de traiter des charges élevées en entrée du moyen de filtration (de 150 L/m².j à 500 L/m².j) tout en donnant d'excellents résultats en sortie: un effluent avec une demande chimique en oxygène (DCO) très inférieure à 100 mg/l et des matières en suspension (MES) très inférieures à 30 mg/l. En outre, il présente une durée de vie élevée (de l'ordre de 10) durant laquelle il ne nécessite aucun entretien (pas de colmatage). D'autres auteurs ont travaillé sur l'utilisation d'écorce de pin pour traiter des eaux usées. Mais, soit les espèces d'écorces utilisées ne sont pas précisées, soit il s'agit de mélange de différents types d'écorces, soit il s'agit d'écorces contenant de nombreuses impuretés. De plus, ces auteurs n'ont pas cherché à traiter des eaux usées domestiques déjà prétraitées par des fosses septiques, mais d'autres types d'effluents : industriels, effluents bruts, eaux grises. Ainsi :
Lens et al (Direct treatment of domestic wastewater by percolation over peat, bark and woodchips, Wat. Res. Vol. 28, No. 1, pp17-26, 1994) décrit le traitement d'effluents bruts provenant d'une station de traitement avant sédimentation primaire, à travers de la tourbe, des copeaux de bois, des morceaux d'écorce ou une combinaison de ces différents matériaux. L'écorce de pin testée est issue d'un mélange indéfini de pin, avec une dominante d'aubier de pin sylvestre. Toutefois, les charges traitées et les capacités épuratoires sont faibles.
Dalahmeh et al. (Efficiency of Bark, activated charcoal, foam and sand filters in reducing pollutant from greywater, Water Air Soil Pollut, 223:3657-3671, 2012) décrit le traitement d'eaux grises par percolation à travers des morceaux d'écorce, du charbon activé, de la mousse de polyuréthane, du sable ou une combinaison de ces différent matériaux. Toutefois, les eaux grises ne contiennent ni matière fécale, ni urine. De plus, l'écorce de pin testée est issue d'un mélange indéfini de pin, sans préciser aucune espèce particulière de pin. Enfin, aucun résultat de performance concernant les matières en suspension n'est décrit.
WO 92/15397 décrit un filtre destiné à retenir des polluants contenus dans des effluents industriels. Le filtre est réalisé à partir matériau ligno-cellulosique comme par exemple des écorces d'arbre, par exemple des écorces de pin sylvestre, ou bien des coquilles de fruit. Toutefois, il ne s'agit pas d'un biofiltre destiné à l'épuration d'eaux usées domestiques, mais d'un filtre physique. Par ailleurs, les tests sont réalisées sur de la poudre d'écorce non applicable aux effluents domestiques car le colmatage biologique se produirait très vite. Enfin, la durée des essais est trop courte pour laisser penser que ce type de filtre fonctionnerait sur des effluents domestiques.

Selon un premier aspect, l'invention a pour objet un filtre d'épuration d'une filière de traitement des eaux usées domestiques, le dit filtre s'étendant substantiellement horizontalement avec une direction de passage des eaux globalement verticale et descendante et comportant :
- une entrée pour les eaux à traiter en position haute et une sortie pour les eaux traitées en position basse,
- un système de distribution des eaux en position haute associé à l'entrée,
- un moyen de répartition des eaux à traiter situé en dessous du système de distribution des eaux à traiter,
- un moyen de filtration interposé entre le moyen de répartition des eaux à traiter et la sortie pour les eaux traitées,
   caractérisé en ce que le dit moyen de filtration comprend, plus particulièrement comprend principalement, plus particulièrement encore est constitué ou essentiellement constitué d'écorces de pin maritime en morceaux.

Selon un mode de réalisation, le moyen de filtration se présente sous la forme d'un lit filtrant drainé à flux vertical d'épaisseur comprise entre 40 cm et 70 cm, préférentiellement entre 50 cm et 65 cm, plus préférentiellement d'environ 55 cm.

Selon un mode de réalisation, le calibre des morceaux d'écorce est compris entre 3 mm et 30 mm, plus particulièrement entre 3 mm et 27 mm, entre 8 mm et 27 mm, entre 5 mm et 25 mm, entre 5 mm et 10 mm ou entre 10 mm et 25 mm.

Selon un mode de réalisation, le moyen de filtration comprend une seule couche de morceaux d'écorces de pin d'un même calibre, ou bien plusieurs couches de morceaux d'écorces de pin de calibres différents disposées les unes sur les autres.

Selon un mode de réalisation, le moyen de répartition des eaux se présente sous la forme d'une bande ou de morceaux de géotextile.

Selon un mode de réalisation, le filtre est contenu dans une ou plusieurs cuves, chacune éventuellement divisées en plusieurs modules.

Selon un mode de réalisation, l'emprise au sol du filtre pour 5 équivalents habitants est comprise entre 3 m² et 7 m², plus particulièrement d'environ 5 m².

Selon un mode de réalisation, l'emprise au sol d'un module du filtre pour 1 équivalent habitant est d'au moins 0,6 m², plus particulièrement d'environ 1 m².

Selon un mode de réalisation, l'emprise au sol d'une cuve du filtre pour 1 équivalent habitant est d'au moins 0,6 m², plus particulièrement d'environ 1 m².

Selon un deuxième aspect, l'invention a pour objet une installation de traitement des eaux usées domestiques comprenant un système de prétraitement, tel qu'une ou plusieurs fosse(s) septique(s), relié à un ou plusieurs filtres selon l'invention.

Selon un mode de réalisation, le ou les filtres sont reliés à un système hydraulique, tel qu'une chasse hydraulique ou une pompe, installé entre la(les) fosse(s) septique(s) et le(s) filtre(s).

Selon un mode de réalisation, lorsque le filtre est divisé en plusieurs modules et/ou plusieurs cuves, le système hydraulique est muni de plusieurs sorties, chaque sortie alimentant au moins un système de distribution de module ou cuve.

Selon un troisième aspect, l'invention a pour objet l'utilisation d'écorces de pin maritime en morceaux comme biofiltre dans le traitement des eaux usées domestiques, en particuliers les eaux usées provenant de fosses septiques.
La figure 1 est une coupe longitudinale par un plan vertical d'un filtre selon l'invention, dans le cas d'un filtre unitaire avec tuyaux de collecte, dans une cuve avec fond.
La figure 2 est une coupe transversale par un plan vertical du filtre de la figure 1.
La figure 3 représente l'évolution de la masse d'un pilote expérimental comprenant des écorces de pin en morceaux en fonction du temps dans des conditions d'alimentation réelles (M = masse (kg) ; J = jours).

Ci-après un exposé détaillé de l'invention assorti d'un exemple et de référence aux dessins.

Selon un premier aspect, l'invention a pour objet un filtre d'épuration d'une filière de traitement des eaux usées domestiques, ledit filtre s'étendant substantiellement horizontalement avec une direction de passage des eaux globalement verticale et descendante et comportant :
- une entrée pour les eaux à traiter en position haute et une sortie pour les eaux traitées en position basse,
- un système de distribution des eaux en position haute associé à l'entrée,
- un moyen de répartition des eaux à traiter situé en dessous du système de distribution des eaux à traiter,
- un moyen de filtration interposé entre le moyen de répartition des eaux à traiter et la sortie pour les eaux traitées.

Selon l'invention, le système de distribution des eaux du filtre permet de répartir de manière homogène les eaux à traiter sur l'aire horizontale haute du moyen de filtration. Il peut par exemple se présenter sous la forme d'un ou plusieurs tuyaux percés d'orifices ou bien sous la forme d'une plaque percée d'orifices. Le système de distribution du filtre peut être muni de vérins de réglages de la planéité qui, le filtre étant placé dans une cuve, sont par exemple soit suspendus au couvercle, soit reposent sur des structures ancrées dans la paroi de la cuve.

Le système de distribution des eaux à traiter est associé à un moyen de répartition des eaux, en particulier une bande ou des morceaux de géotextile, que l'on intercale entre le système de distribution et le haut du moyen de filtration ou le voisinage du haut du moyen de filtration. Ce moyen de répartition des eaux permet d'améliorer la diffusion des eaux à traiter au sein du moyen de filtration. Le moyen de répartition, notamment sous forme de bandes ou de morceaux de géotextile, peut reposer directement sur le haut du moyen de filtration.

La sortie pour les eaux traitées est prévue dans le fond du filtre. On entend par « fond », la partie la plus basse du filtre.

Selon un premier mode de réalisation, le fond du filtre est totalement ouvert.

Selon un deuxième mode de réalisation, le fond du filtre comprend une paroi horizontale pouvant se prolonger verticalement sur un ou plusieurs côtés. Pour permettre l'évacuation des eaux traitées, la paroi peut être perméable à l'eau ou bien comporter des passages, tels que des perçages ou bien des orifices pouvant être raccordés à des tuyaux d'évacuation. La paroi peut aussi être à la fois perméable à l'eau et comporter des perçages ou orifices. Selon un mode de réalisation particulier, le fond du filtre comporte une paroi horizontale pleine qui se prolonge verticalement sur un ou plusieurs côtés et il est prévu un ou plusieurs orifices dans au moins l'une des parois verticales attenantes à la paroi horizontale.

Selon la présente invention, le moyen de filtration comprend, plus particulièrement comprend principalement, plus particulièrement encore est constitué ou essentiellement constitué d'écorces de pin en morceaux.

On entend par « écorce de pin », l'écorce externe du pin, c'est-à-dire l'enveloppe extérieure de l'arbre. Au sens de l'invention, l'écorce ne comprend pas les enveloppes de l'arbre qui sont situées sous l'écorce externe, comme le liber, le cambium, l'aubier ou le duramen.

Selon l'invention, les écorces de pin sont des écorces de pin maritime (*Pinus pinaster*).

Selon un mode de réalisation, les écorces de pin sont choisies parmi une écorce pure d'une seule espèce, normalisée selon la norme NF 44-551 (avril 2006), avec une composition strictement contrôlée. Les écorces de pin selon l'invention contiennent notamment moins de 5 % d'écorce étrangère à ladite espèce et moins de 5 % de matériaux étrangers à l'écorce externe, tels que le liber, le bois ou l'aubier (% exprimé en masse).

Pour un développement industriel, le filtre doit être efficace le plus longtemps possible sans nécessiter d'entretien. Selon l'invention, la pureté de l'écorce contribue à augmenter fiabiliser les performances épuratoires et à augmenter la durée de vie du système d'épuration. Si l'on utilise un mélange d'écorce contenant une prépondérance de corps étrangers comme le liber, la durée de vie du filtre risque de diminuer.

Selon un mode de réalisation particulier, le moyen de filtration se présente sous la forme d'un lit filtrant drainé à flux globalement vertical descendant, d'épaisseur comprise entre 40 cm et 70 cm, préférentiellement entre 50 cm et 65 cm, plus préférentiellement d'environ 55 cm.

Les morceaux d'écorce de pin du moyen de filtration peuvent être disposés en vrac naturellement ou bien sont contenus dans des filets souples facilitant ainsi le remplacement du matériau.

Le calibre des morceaux d'écorce de pin du moyen de filtration peut être compris entre 3 mm et 30 mm, plus particulièrement entre 3 mm et 27 mm, entre 8 mm et 27 mm, entre 5 mm et 25 mm, ou entre 10 mm et 25 mm. On peut se procurer les morceaux d'écorces de pin dans le commerce, par exemple de calibre compris entre 0 mm et 5 mm, entre 5 mm et 10 mm, entre 10 mm et 25 mm, entre 25 mm et 40 mm ou entre 40 mm et 60 mm. L'écorce de pin peut être découpée au calibre souhaité à l'aide de broyeurs. Le calibrage des morceaux d'écorce de pin peut être réalisé à l'aide d'une grille de calibrage (tamis) ou de plusieurs grilles de calibrage ayant des mailles de la taille désirée.

Les morceaux d'écorces de pin du moyen de filtration présentent typiquement une capacité de rétention d'eau (définie par la norme NF EN 13 041) comprise entre 50 l par m³ et 350 l par m³, plus particulièrement entre 80 l par m³ et 280 l par m³. Cette capacité de rétention confère aux morceaux d'écorce de pin une forte capacité d'absorption des effluents. Les espaces libres entre les morceaux d'écorce de pin favorisent une oxygénation optimale des bactéries et protozoaires qui réalisent l'épuration.

Le moyen de filtration peut comprendre une seule couche de morceaux d'écorces de pin d'un seul et même calibre, ou bien plusieurs couches de morceaux d'écorces de pin de calibres différents disposées les unes sur les autres. Dans ce cas, du haut vers le bas, on dispose de préférence des couches de morceaux d'écorce de pin de calibre décroissant.

Dans un mode de réalisation particulier, le moyen de filtration comprend deux couches de morceaux d'écorces de pin de calibres différents : une couche supérieure de calibre compris entre 10 mm et 25 mm et une couche inférieure de calibre compris entre 5 mm et 10 mm. Dans ce cas, le rapport entre la hauteur de la couche supérieure de gros calibre et la hauteur de la couche inférieure de petit calibre peut être compris entre 50/50 et 75/25. Par exemple, la couche supérieure de gros calibre ayant un calibre de 10 mm à 25 mm peut avoir une épaisseur de 40 cm et la couche inférieure de petit calibre ayant un calibre de 5 mm à 10 mm peut avoir une épaisseur de 15 cm.

Les écorces de pin présentent en général un pH à l'eau (déterminé selon la norme NF EN 13 037) compris entre 4,5 et 6,5, par exemple égal à environ 5.

Dans une réalisation, le moyen de filtration est essentiellement constitué d'écorces de pin en morceaux, mais on peut aussi envisager de combiner les morceaux d'écorces de pin avec d'autres composants filtrants, tels que du sable, de la zéolithe, de la laine de roche ou des copeaux de coco ou un autre matériau fonctionnellement équivalent.

Le moyen de filtration selon l'invention permet de réaliser un filtre compact dont l'emprise au sol comprise entre 1 m² et 7 m², plus particulièrement d'environ 5 m². En particulier, l'emprise au sol du filtre selon l'invention pour 5 équivalents habitants est comprise entre 3 m² et 7 m², plus particulièrement d'environ 5 m².

Selon un premier mode de réalisation, à l'instar du filtre EPARCO à zéolithe, le filtre selon l'invention est unitaire et contenu dans une cuve dont il occupe toute l'aire horizontale ou substantiellement toute l'aire horizontale. Par « unitaire », on entend un filtre qui n'est pas compartimenté.

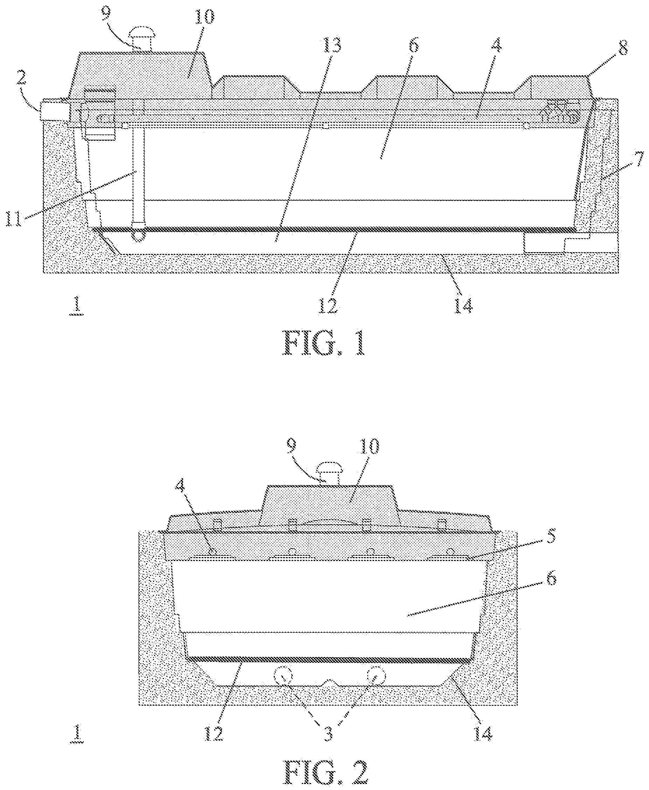

Selon ce premier mode de réalisation, par référence aux figures 1 et 2, le filtre 1 est contenu dans une cuve 7 éventuellement fermée par un couvercle 8.

Un moyen d'aération 9 tel qu'une cheminée de ventilation, s'étendant verticalement dans la cuve 7 et traversant le couvercle 8 participe à l'aération générale du filtre 1 en assurant la ventilation de l'espace 10 situé entre le couvercle 8 et le moyen de filtration 6.

Un second tube 11, situé par exemple dans le prolongement du précédent, met en communication l'espace 10 avec l'espace 13.

Le filtre 1 comporte un système de distribution des eaux 4 sous la forme de plusieurs tuyaux percés d'orifices permettant de répartir les eaux à traiter sur le moyen de filtration 6 de manière homogène, ainsi qu'un moyen de répartition 5, tel que des géotextiles, pour assurer la diffusion des eaux à traiter substantiellement dans tout le volume du moyen de filtration 6.

Au sein de la cuve 7, le moyen de filtration 6 repose sur un caillebotis 12 en forme de grille, notamment de maille inférieure à 5 mm et supérieure ou égale à 0,7 mm, ou bien sur une grille (non représentée), telle qu'une géogrille, ladite grille étant elle-même supportée par un caillebotis 12, créant ainsi un espace vide 13 de 10 cm à 15 cm entre le caillebotis 12 et le fond 14 de la cuve 7. Cet espace vide 13 permet de faciliter l'évacuation des eaux traitées d'une part, et la ventilation de la sous-face du moyen de filtration 6 d'autre part (apport d'air frais et évacuation du gaz carbonique).

Dans sa partie basse, le fond 14 du filtre 1 comprend une sortie 3 des eaux traitées, ici sous la forme d'orifices de sortie. Le cas échéant, des tuyaux d'évacuation sont branchés sur ces orifices de sortie.

Dans l'espace 13, on peut éventuellement rajouter un système de récupération des eaux traitées, tel que des tuyaux de drainage, que l'on raccorde aux orifices de sortie.

La cuve 7 peut être réalisée en un matériau étanche à l'eau, léger et résistant, par exemple en un matériau composite tel que le polyester renforcé de verre, cette réalisation n'étant pas limitative.

Selon une variante de ce premier mode de réalisation, on peut prévoir une cuve 7 avec un fond 14 totalement ouvert ou bien une cuve 7 dont le fond 14 est percé d'orifices, ou même une cuve 7 dont le fond 14 est perméable, de manière à permettre l'évacuation des eaux traitées dans le sous-sol adjacent. Selon les contraintes locales, l'évacuation des eaux traitées peut se faire soit directement dans le sol sous-jacent si la perméabilité de celui-ci est suffisante, soit au travers d'un lit d'infiltration situé sous la cuve 7, soit dans le sol au niveau de tranchées ou d'un lit d'épandage déportés, soit par rejet au milieu hydraulique superficiel, soit par irrigation enterrée d'arbres ou d'arbustes d'ornement.

Selon un deuxième mode de réalisation, le filtre est contenu dans une cuve où il est divisé en plusieurs modules de même dimension ou de dimensions différentes, chaque module comportant au moins un système de distribution des eaux associé à l'entrée et un moyen de répartition des eaux à traiter.

L'emprise au sol de chaque module peut être d'au moins 0,6 m², plus particulièrement d'environ 1 m². En particulier, le filtre est dimensionné de telle manière à pouvoir traiter les eaux usées d'une personne (1 équivalent habitant) tout en occupant une surface au sol d'au moins 0,6 m², plus préférentiellement d'environ 1 m². Le filtre comprend ainsi de préférence un système de distribution par m² de surface.

A l'instar du premier mode de réalisation, les moyens de filtration des différents modules peuvent reposer sur un caillebotis en forme de grille, notamment de maille inférieure à 5 mm et supérieure ou égale à 0,7 mm, ou bien sur une grille, telle qu'une géogrille, ladite grille étant elle-même supportée par un caillebotis, créant ainsi un espace vide de 10 cm à 15 cm entre la grille et le fond de la cuve permettant de faciliter l'évacuation des eaux traitées d'une part, et la ventilation de la sous-face des moyens de filtration d'autre part (apport d'air frais et évacuation du gaz carbonique). Si le fond du filtre est étanche, on peut prévoir un ou plusieurs perçages d'axe horizontal (orifices de sortie) pour permettre le branchement de tubes pour évacuer l'eau.

Selon une variante de ce deuxième mode de réalisation, et à l'instar du premier mode de réalisation, on peut prévoir une cuve avec un fond totalement ouvert ou bien une cuve dont le fond est percé d'orifices, ou même une cuve dont le fond est perméable, de manière à permettre l'évacuation des eaux traitées dans le sous-sol adjacent. Selon les contraintes locales, l'évacuation des eaux traitées peut se faire soit directement dans le sol sous-jacent si la perméabilité de celui-ci est suffisante, soit au travers d'un lit d'infiltration situé sous la cuve, soit dans le sol au niveau de tranchées ou d'un lit d'épandage déporté, soit rejet au milieu hydraulique superficiel, soit par irrigation enterrée d'arbres ou d'arbustes d'ornement.

Selon un troisième mode de réalisation, le filtre est contenu dans plusieurs cuves de même dimension ou de dimensions différentes, chaque cuve contenant un ou plusieurs modules comportant au moins un système de distribution des eaux associé à l'entrée et au moins un moyen de répartition des eaux à traiter.

L'emprise au sol de chaque cuve peut être d'au moins 0,6 m², plus particulièrement d'environ 1 m², ou bien d'au moins 0,6 m², plus particulièrement d'environ 1 m² par module. En particulier, le filtre est dimensionné de telle manière à pouvoir traiter les eaux usées d'une personne (1 équivalent habitant) tout en occupant une surface au sol d'au moins 0,6 m², plus préférentiellement d'environ 1 m². Le filtre comprend ainsi de préférence un système de distribution par m² de surface.

A l'instar du premier et du second mode de réalisation, les moyens de filtration de la ou des différentes cuves peuvent reposer sur un caillebotis en forme de grille, notamment de maille inférieure à 5 mm et supérieure ou égale à 0,7 mm, ou bien sur une grille, telle qu'une géogrille, ladite grille étant elle-même supportée par un caillebotis, créant ainsi un espace vide de 10 cm à 15 cm entre la grille et le fond de la cuve permettant de faciliter l'évacuation des eaux traitées d'une part, et la ventilation de la sous-face des moyens de filtration d'autre part (apport d'air frais et évacuation du gaz carbonique).

Selon ce troisième mode de réalisation, les cuves peuvent avoir un fond totalement ouvert, ou bien avoir un fond percé d'orifices, ou bien un fond perméable, de manière à permettre l'évacuation des eaux traitées dans le sous-sol adjacent. On peut aussi combiner des cuves sans fond, ou bien dont le fond est percé d'orifices ou bien est perméable, avec des cuves qui disposent d'un fond.

Selon un deuxième aspect, l'invention concerne une installation de traitement des eaux usées domestiques comprenant un système de prétraitement, tel qu'une ou plusieurs fosse(s) septique(s), relié à un ou plusieurs filtre(s) selon l'invention.

Selon un mode réalisation, le ou les filtres sont reliés à un système hydraulique, tel qu'une chasse hydraulique ou une pompe, installé entre la fosse septique et le(s) filtre(s).

On peut combiner plusieurs filtres selon l'invention de taille équivalente, ou bien de tailles différentes. L'installation peut ainsi comprendre un ou plusieurs filtres selon l'invention dont les surfaces au sol sont identiques ou différentes, notamment comprises entre 1 m² et 7 m². Dans ce cas, le système hydraulique est raccordé à chacun des filtres pour assurer la répartition des eaux à traiter parmi les différents filtres en fonction de leur capacité d'épuration.

Lorsque le filtre est divisé en plusieurs modules ou cuves, le système hydraulique est muni de plusieurs sorties, chaque sortie alimentant au moins un système de distribution de module ou cuves, pour permettre l'équidistribution des eaux à traiter dans les différents modules ou cuves.

Ledit système hydraulique peut être muni en outre d'une ou plusieurs sorties libres pouvant être raccordées à un ou plusieurs modules ou cuves, supplémentaires, pour pouvoir augmenter la capacité d'épuration de l'installation de traitement des eaux. On peut ainsi ajouter autant de module ou cuves, que de personne supplémentaire.

Selon un troisième aspect, l'invention concerne l'utilisation d'écorces de pin maritime en morceaux, telle que décrites précédemment, comme biofiltre dans le traitement des eaux usées domestiques, en particuliers les eaux usées provenant de fosses septiques.

On entend par biofiltre, un système d'épuration biologique où la biomasse épuratrice aérobie est fixée sur un matériau solide à la surface duquel percole l'eau à traiter.

L'exemple suivant illustre l'invention sans la limiter.

### Exemple

Les performances épuratoires d'un moyen de filtration comprenant des morceaux d'écorce de pin, de type pin maritime provenant des Landes, ont été testées dans une configuration pilote.

### 1.1. Caractéristiques des morceaux d'écorce de pin

Deux calibres de morceaux d'écorce de pin ont été testés: calibre compris entre 5 mm et 10 mm et calibre compris entre 10 mm et 25 mm.

| Caractéristiques des écorces de pin | Calibre 5-10 mm | Calibre 10-25 mm |
|---|---|---|
| Matière organique (% du produit sec) | 96 | 95 |
| Matière Sèche (% du produit brut) | 50 | 50 |
| Capacité de rétention en eau (ml/l) | 250 | 150 |
| Conductivité (mS/m) | 10 | 5 |
| pH H₂O | 5 | 5 |
| Masse volumique (kg/l) | 0,16 | 0,16 |

### 1.2. Moyen de filtration

Les tests ont été faits en pilotes de laboratoire, avec des effluents prélevés à la sortie de fosses septiques. Ces dernières fonctionnent dans des conditions réelles sur la plateforme du Centre Technique de Recherche EPARCO située à Mèze (Hérault). La plateforme reçoit les eaux usées d'une quinzaine de villas. Les pilotes sont des colonnes en PVC de diamètre 300 mm pour une hauteur d'environ 1,5 m. Elles sont alimentées par le haut au moyen de pompes péristaltiques qui permettent de régler précisément le débit journalier en entrée. L'effluent percole verticalement dans le moyen de filtration dans lequel se développent des microorganismes aérobies qui réalisent une épuration biologique de la pollution. L'effluent traité ressort en partie basse et est rejeté.

L'aménagement de la colonne est le suivant (du haut vers le bas): entrée des effluents prétraités, géotextile de répartition, moyen de filtration composé de morceaux d'écorces de pin, géogrille posée sur un fond perforé, sortie des effluents traités.
La hauteur des matériaux filtrants est H=55 cm.

### 1.3. Conditions de fonctionnement

Alimentation par des effluents de sortie de fosse septique. Les effluents septiques ont les caractéristiques suivantes (moyenne ± écart-type, en mg/l):

| Demande chimique en oxygène (DCO) | Matières en suspension (MES) | Azote total Kjeldhal (NTK) | N-NH4 | N-NO3 | N-NO2 |
|---|---|---|---|---|---|
| 442 ± 146 | 74 ± 32 | 83 ± 12 | 66 ± 20 | 0 | 0 |

Les essais ont duré jusqu'à 1815 jours.

### 1.4. Suivi analytique (méthodes normalisées) :

On analyse régulièrement au cours du temps les effluents d'entrée et de sortie de-colonne. Des échantillons ponctuels moyens sont prélevés au cours de un à trois cycles d'alimentation de colonne. Les paramètres analysés sont les suivants
- DCO
- DBO5
- MES
- Azote (Nitrates, Ammonium)

Le rapport DCO/DBO5 en sortie de colonne a montré qu'une DCO de 100 mg/l correspond à une DBO5 de 35 mg/l.

De plus, les colonnes filtrantes sont placées sur des balances et pesées en continu. L'évolution de la masse dans le temps traduit l'état d'encombrement du filtre par la biomasse, et donc un éventuel colmatage à long terme.

### 2. Résultats

### 2.1. Test pour évaluer de la durée de vie du matériau

Les résultats présentés couvrent une période de 1815 1224 jours, avec une charge journalière de 250 l/m2, puis de 150 L/m2.j après 1288 jours de fonctionnement.

Le but de ce premier test a été d'évaluer la durée de vie du matériau et donc sa résistance à la biodégradation due à l'action des microorganismes des eaux usées. On a rempli une colonne avec de l'écorce de calibre 10/25 mm sur une hauteur de 55 cm.

Après 5 ans de fonctionnement, il apparaît que le matériau ne s'est pas biodégradé, et que rien de visible ne s'est produit quant à sa résistance mécanique. Il n'y a donc pas d'altération du matériau. On constate par ailleurs une nitrification constante et relativement importante, signe que le filtre est toujours bien aéré et possède toujours ses capacités d'oxydation de la matière organique.

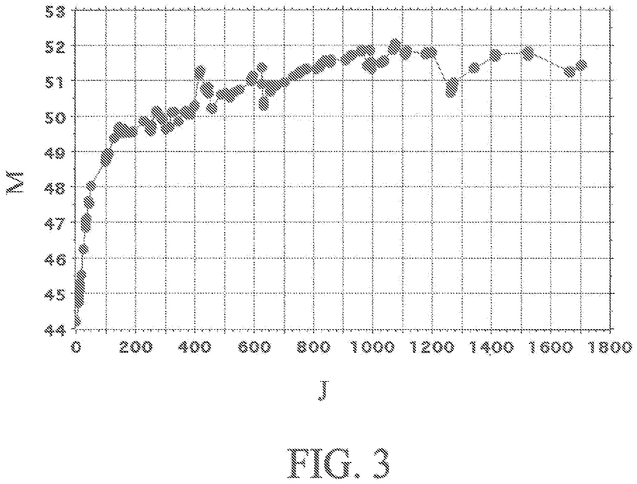

L'évolution de la masse de la colonne montre que l'on tend vers une asymptote (voir la figure 3). Cela signifie qu'après plusieurs années de test en conditions d'alimentation réelles, il n'y a pas d'accumulation de matière dans le filtre qui tend vers un équilibre biologique.

Ces données permettent d'envisager une durée de vie du filtre de l'ordre de 10 ans.

### 2.2. Test des performances épuratoires

### 2.2.1. Présentation

Comme il a été constaté que le matériau testé ne se biodégradait pas, il a été mis en route plusieurs colonnes supplémentaires, ce qui permet de tester plusieurs charges d'alimentation et plusieurs configurations d'aménagement intérieur des filtres : filtre mono-couche ou bi-couche d'écorces, différents calibres d'écorces, différentes charges d'alimentation en effluent septique.

### 2.2.2. Résultats

Plusieurs configurations de filtres permettent d'obtenir une DCO de l'effluent traité inférieure à 100 mg/l. Par exemple, avec une charge entrante de 250 l/m².jour d'effluent septique, un filtre bi-couche (calibre 10-25 mm sur 40 cm d'épaisseur en haut et calibre 5-10 mm sur 15 cm d'épaisseur en bas) donne en sortie, après 690 jours de test, les résultats moyens suivants : DCO = 66 mg/l et MES 7 mg/l, avec un taux de NH₄ résiduel négligeable (4 mg/l). Comme autre exemple, un filtre mono couche (calibre 5-10 mm sur 55 cm d'épaisseur) en test à 500 l/m²j pendant 168 jours donne les résultats suivants : DCO = 74 mg/l et MES 14 mg/l. Avec cette même configuration et une alimentation à 150 l/m².j, un filtre donne les résultats suivants après 445 jours : DCO=70 mg/l, MES = 7 mg/l.

### 3. Conclusion

Les résultats en condition d'alimentation réelle avec des effluents septiques montrent que les morceaux d'écorce de pin ne se biodégradent pas à moyen terme et que les filtres testés donnent d'excellents résultats : DCO très inférieure à 100 mg/l et MES très inférieures à 30 mg/l. Ces seuils correspondent au niveau d'épuration recherché en assainissement non collectif. On relève que ces performances ont été obtenues avec des charges d'effluent élevées en entrée du moyen de filtration, soit 250 l/m².j à 500 l/m².j contre 30 à 50 l.m².j pour un filtre à sable conventionnel.

## Revendications

1. Filtre (1) d'épuration d'une filière de traitement des eaux usées domestiques s'étendant substantiellement horizontalement avec une direction de passage des eaux globalement verticale et descendante et comportant :
- une entrée (2) pour les eaux à traiter en position haute et une sortie (3) pour les eaux traitées en position basse,
- un système de distribution (4) des eaux à traiter en position haute associé à l'entrée (2),
- un moyen de répartition (5) des eaux à traiter situé en dessous du système de distribution (4) des eaux à traiter,
- un moyen de filtration (6) interposé entre le moyen de répartition (5) des eaux à traiter et la sortie (3) pour les eaux traitées,
**caractérisé en ce que** ledit moyen de filtration (6) comprend, plus particulièrement comprend principalement, plus particulièrement encore est constitué ou essentiellement constitué d'écorces de pin maritime en morceaux.

2. Filtre (1) selon la revendication 1, **caractérisé en ce que** le moyen de filtration (6) se présente sous la forme d'un lit filtrant drainé à flux vertical d'épaisseur comprise entre 40 cm et 70 cm, préférentiellement entre 50 cm et 65 cm, plus préférentiellement d'environ 55 cm.

3. Filtre (1) selon la revendication 1 ou 2, **caractérisé en ce que** le calibre des morceaux d'écorce est compris entre 3 mm et 30 mm, plus particulièrement entre 3 mm et 27 mm, entre 8 mm et 27 mm, entre 5 mm et 25 mm, entre 5 mm et 10 mm ou entre 10 mm et 25 mm.

4. Filtre (1) selon l'une quelconque des revendications 1 à 3, **caractérisé en ce que** le moyen de filtration (6) comprend une seule couche de morceaux d'écorces de pin d'un même calibre, ou bien plusieurs couches de morceaux d'écorces de pin de calibres différents disposées les unes sur les autres.

5. Filtre (1) selon l'une quelconque des revendications 1 à 4, **caractérisé en ce que** le moyen de répartition (5) se présente sous la forme d'une bande ou de morceaux de géotextile.

6. Filtre (1) selon l'une quelconque des revendications 1 à 5, **caractérisé en ce que** l'emprise au sol du filtre (1) pour 5 équivalents habitants est comprise entre 3 m² et 7 m².

7. Filtre (1) selon l'une quelconque des revendications 1 à 6, **caractérisé en ce que** le filtre (1) est contenu dans une ou plusieurs cuves (7) chacune éventuellement divisées en plusieurs modules, l'emprise au sol dudit module ou de ladite cuve pour 1 équivalent habitant étant d'au moins 0,6 m², plus particulièrement d'environ 1 m².

8. Installation de traitement des eaux usées domestiques comprenant un système de prétraitement, tel qu'une ou plusieurs fosses septiques, relié à un ou plusieurs filtres (1) selon l'une quelconque des revendications 1 à 7.

9. Installation selon la revendication 8, **caractérisée en ce que** le ou les filtres (1) sont reliés à un système hydraulique, tel qu'une chasse hydraulique ou une pompe, installé entre la fosse septique et le(s) filtre(s) (1).

10. Installation selon la revendication 8 ou 9, **caractérisée en ce que**, lorsque le filtre (1) est divisé en plusieurs modules et/ou plusieurs cuves, le système hydraulique est muni de plusieurs sorties, chaque sortie alimentant au moins un système de distribution (4) de module et/ou de cuve.

11. Utilisation d'écorces de pin maritime en morceaux comme biofiltre dans le traitement des eaux usées domestiques, en particuliers les eaux usées provenant de fosses septiques.

## Patentansprüche

1. Filter (1) zum Reinigen einer Anlage zur Behandlung des Haushaltsabwassers, der sich hauptsächlich horizontal mit einer allgemein vertikalen und abwärtigen Durchgangsrichtung des Wassers erstreckt und aufweist:
- einen Einlass (2) für das zu behandelnden Wasser in hoher Position und einen Auslass (3) für das behandelte Wasser in niedriger Position,
- ein Verteilungssystem (4) des zu behandelnden Wassers in hoher Position, das dem Einlass (2) zugeordnet ist,
- ein Aufteilungsmittel (5) des zu behandelnden Wassers, das sich unter dem Verteilungssystem (4) des zu behandelnden Wassers befindet,
- ein Filtrationsmittel (6), das zwischen dem Aufteilungsmittel (5) des zu behandelnden Wassers und dem Auslass (3) für das behandelte Wasser angeordnet ist,
**dadurch gekennzeichnet, dass** das Filtrationsmittel (6) umfasst, insbesondere hauptsächlich umfasst, noch besonderer aus gestückelter Seekieferborke besteht oder im Wesentlichen besteht.

2. Filter (1) nach Anspruch 1, **dadurch gekennzeichnet, dass** das Filtrationsmittel (6) in Form eines dränierten Vertikalstrom-Filterbetts mit einer Dicke zwischen 40 cm und 70 cm, vorzugsweise zwischen 50 cm und 65 cm, noch vorzugsweiser von zirka 55 cm vorliegt.

3. Filter (1) nach Anspruch 1 oder 2, **dadurch gekennzeichnet, dass** das Kaliber der Borkenstücke zwischen 3 mm und 30 mm, insbesondere zwischen 3 mm und 27 mm, zwischen 8 mm und 27 mm, zwischen 5 mm und 25 mm, zwischen 5 mm und 10 mm oder zwischen 10 mm und 25 mm liegt.

4. Filter (1) nach einem der Ansprüche 1 bis 3, **dadurch gekennzeichnet, dass** das Filtrationsmittel (6) eine einzige Schicht Kiefernborkenstücke desselben Kalibers oder mehrere Schichten Kiefernborkenstücke unterschiedlicher Kaliber umfasst, die übereinander angeordnet sind.

5. Filter (1) nach einem der Ansprüche 1 bis 4, **dadurch gekennzeichnet, dass** das Aufteilungsmittel (5) in Form eines Streifens oder von Stücken eines Geotextils vorliegt.

6. Filter (1) nach einem der Ansprüche 1 bis 5, **dadurch gekennzeichnet, dass** der Flächenbedarf des Filters (1) für 5 Einwohneräquivalente zwischen 3 m² und 7 m² liegt.

7. Filter (1) nach einem der Ansprüche 1 bis 6, **dadurch gekennzeichnet, dass** der Filter (1) in einem oder mehreren Behältern (7) enthalten ist, die jeweils eventuell in mehrere Module unterteilt sind, wobei der Flächenbedarf des Moduls oder des Behälters für 1 Einwohneräquivalent mindestens 0,6 m², insbesondere zirka 1 m² beträgt.

8. Anlage zur Behandlung von Haushaltsabwasser, umfassend ein Vorbehandlungssystem wie eine oder mehrere Klärgruben, die mit einem oder mehreren Filtern (1) nach einem der Ansprüche 1 bis 7 verbunden sind.

9. Anlage nach Anspruch 8, **dadurch gekennzeichnet, dass** der oder die Filter (1) mit einem Wassersystem wie eine Wasserspülung oder eine Pumpe verbunden sind, das zwischen der Klärgrube und dem/n Filter/n (1) installiert ist.

10. Anlage nach Anspruch 8 oder 9, **dadurch gekennzeichnet, dass**, wenn der Filter (1) in mehrere Module und/oder mehrere Behälter unterteilt ist, das Wassersystem mit mehreren Auslässen versehen ist, wobei jeder Auslass mindestens ein Modul- und/oder Behälter-Verteilungssystem (4) versorgt.

11. Verwendung von gestückelter Seekieferborke als Biofilter bei der Behandlung von Haushaltsabwasser, insbesondere von Abwasser aus Klärgruben.

## Claims

1. Purification filter (1) for a domestic wastewater treatment network extending substantially horizontally with a direction of water flow that is broadly vertical and downward, and comprising:
- an inlet (2) for the water to be treated in an upper position and an outlet (3) for the treated water in a lower position;
- a distribution system (4) for distributing the water to be treated in an upper position associated with the inlet (2);
- a means (5) for spreading the water to be treated, located below the distribution system (4) of the water to be treated;
- a filtration means (6) positioned between the spreading means (5) for the water to be treated and the outlet (3) for the treated water,
**characterized in that** said filtration means (6) comprises, more specifically mainly comprises, even more specifically consists of, or essentially consists of maritime pine bark in pieces.

2. Filter (1) according to claim 1, **characterized in that** the filtration means (6) is in the form of a drained vertical flow filter bed between 40 cm and 70 cm thick, preferably between 50 cm and 65 cm, more preferably about 55 cm.

3. Filter (1) according to claim 1 or 2, **characterized in that** the gauge of the pieces of bark is between 3 mm and 30 mm, more specifically between 3 mm and 27 mm, between 8 mm and 27 mm, between 5 mm and 25 mm, between 5 mm and 10 mm or between 10 mm and 25 mm.

4. Filter (1) according to any one of claims 1 to 3, **characterized in that** the filtration means (6) comprises a single layer of maritime pine bark pieces of a single gauge, or several layers of maritime pine bark pieces of different sizes arranged one on top of another.

5. Filter (1) according to any one of claims 1 to 4, **characterized in that** the spreader means (5) is in the form of a strip or pieces of geotextile.

6. Filter (1) according to any one of claims 1 to 5, **characterized in that** the footprint of the filter (1) for 5 population-equivalents is between 3 m² and 7 m².

7. Filter (1) according to any one of claims 1 to 6, **characterized in that** the filter (1) is contained within one or more tanks (7), each possibly divided into several modules, the footprint of said filter or said tank for 1 population-equivalent being at least 0.6 m², more specifically about 1 m².

8. Domestic wastewater treatment facility comprising a pretreatment system, such as one or more septic tanks, connected to one or more filters (1) according to any one of claims 1 to 7.

9. Facility according to claim 8, **characterized in that** the filter(s) (1) are connected to a hydraulic system, such as a hydraulic flush or a pump, installed between the septic tank and the filter(s) (1).

10. Facility according to claim 8, or 9 **characterized in that**, when the filter (1) is divided into several modules and/or several tanks, the hydraulic system is equipped with several outlets, each outlet supplying at least one module and/or tank distribution system (4).

11. Use of maritime pine bark pieces as a biofilter in the treatment of domestic wastewater, in particular the wastewater from septic tanks.
